# EUROPÄISCHE PATENTSCHRIFT

(11) **EP 3 597 879 B1**
(45) Veröffentlichungstag und Bekanntmachung des Hinweises auf die Patenterteilung: **12.07.2023**
(21) Anmeldenummer: 19173991.1
(22) Anmeldetag: 13.05.2019
(51) Int. Cl.: F01P 3/18, F01M 5/00, F01P 7/16, F01P 11/08

(54) **LANDWIRTSCHAFTLICHE MASCHINE MIT EINEM KÜHLSYSTEM**
AGRICULTURAL VEHICLE WITH A COOLING SYSTEM
VÉHICULE AGRICOLE AVEC UN SYSTÈME DE REFROIDISSEMENT

(30) Priorität: 16.07.2018 DE 102018117136
(43) Veröffentlichungstag der Anmeldung: 22.01.2020
(73) Patentinhaber: CLAAS Tractor SAS, 78141 Velizy-Villacoublay (FR)
(72) Erfinder: Renaud, Jeremy, 27310 Bourg Achard (FR)
(74) Vertreter: CLAAS Gruppe

(56) Entgegenhaltungen:
- EP-A1- 3 267 007
- WO-A1-98/12425
- WO-A1-2009/045159
- DE-A1-102004 024 289

## Beschreibung

Die Erfindung betrifft eine landwirtschaftliche Maschine mit einem Kühlsystem.

Landwirtschaftliche Maschinen, wie beispielsweise Traktoren, weisen üblicherweise eine oder mehrere ölführende Funktionseinheiten auf. Diese Funktionseinheiten nutzen Öl zur Schmierung und/oder zur Übertragung von hydraulischer Leistung. Übliche ölführende Funktionseinheiten der landwirtschaftlichen Maschinen sind beispielsweise hydraulische Aggregate, insbesondere hydraulische Nebenaggregate, und Getriebe. Die Getriebe und die hydraulischen Aggregate wirken für gewöhnlich mit einer Verbrennungskraftmaschine zusammen, welche als Antrieb dient.

Um das Öl auf einer vorgegebenen Betriebstemperatur zu halten, ist üblicherweise eine Kühlung vorgesehen. Bei der Kühlung wird das Öl für gewöhnlich in einem Kreislauf durch einen Ölkühler geleitet. Der Ölkühler nutzt üblicherweise Luft zur Kühlung des durchgeleiteten Öles, welche von einem Kühlgebläse angesaugt wird. Beispielhaft sei hierzu auf die die DE 10 2004 024 289 A1 verwiesen.

Aus der WO 2009/045159 A1, der WO 98/12425 A1 und der EP 3 267 007 A1 sind weiterhin Kühlsysteme bekannt, bei denen das Öl auf Betriebstemperatur gehalten wird, indem der Ölkreislauf über einen Kühler bzw. Wärmetauscher mit einem Kühlmittelkreislauf verbunden ist.

Es ist eine Aufgabe der Erfindung, wenigstens eine alternative Möglichkeit vorzuschlagen, um das Öl einer ölführenden Funktionseinheit einer landwirtschaftlichen Maschine zu kühlen.

Diese Aufgabe wird mit einer landwirtschaftlichen Maschine mit einem Kühlsystem gelöst, welches die Merkmale des Anspruches 1 aufweist. Vorteilhafte Ausführungsformen und/oder Ausgestaltungen und/oder Aspekte der Erfindung ergeben sich aus den Unteransprüchen, der nachfolgenden Beschreibung und den Figuren.

Die erfindungsgemäße landwirtschaftliche Maschine umfasst ein Kühlsystem, das einen wasserführenden Kühlkreis bzw. Kühlkreislauf und einen ölführenden Kühlkreis bzw. Kühlreislauf umfasst. Der wasserführende Kühlkreis ist eingerichtet, an eine Verbrennungskraftmaschine kühlungsmäßig angeschlossen zu werden, welche eingerichtet ist, mit Wasser gekühlt zu werden. Dazu ist dem wasserführenden Kühlkreis wenigstens eine Koppelstelle zugeordnet. Insbesondere ist der wasserführende Kühlkreis zur Kühlung der Verbrennungskraftmaschine mittels Wasser als Kühlmedium eingerichtet. Dem wasserführenden Kühlkreis ist eine Fördereinrichtung, wie beispielsweise eine Förderpumpe, zugeordnet, welche eingerichtet ist, das Wasser des wasserführenden Kühlkreises in eine Förderrichtung zu bewegen.

Der ölführende Kühlkreis ist eingerichtet, an eine ölführende Funktionseinheit kühlungsmäßig angeschlossen zu werden. Der wasserführende Kühlkreis ist zur Kühlung des Öles der Funktionseinheit eingerichtet. Insbesondere ist der ölführende Kühlkreis eingerichtet, das Öl der Funktionseinheit als Kühlmedium und/oder ein anderes Öl als Kühlmedium zu nutzen. Das Öl der Funktionseinheit dient als Hydrauliköl und/oder Schmieröl.

Erfindungsgemäß ist es vorgesehen, dass der wasserführende Kühlkreis und der ölführende Kühlkreis kühlungsmäßig miteinander verbunden sind, um über den wasserführenden Kühlkreis das Öl des ölführenden Kühlkreises zu kühlen. Der Gedanke beruht darauf, einen Wärmeaustausch zwischen dem Wasser des wasserführenden Kreislaufes und dem Öl des ölführenden Kreislaufes zu ermöglichen, um auf diese Weise das Öl des ölführenden Kreislaufes zu kühlen, wobei grundsätzlich auch ein Erwärmen des Öles des ölführenden Kreislaufes über das Wasser des wasserführenden Kreislaufes möglich ist. Durch die Nutzung des Wassers zur Kühlung des Öles kann im Vergleich zu der bisherigen Nutzung von Luft zur Kühlung des Öles eine größere Wärmemenge abgeführt werden, da Wasser gegenüber Luft eine höhere Wärmeleitfähigkeit hat. Dadurch ergibt sich auch der Vorteil, dass das Kühlsystem oder zumindest einzelne Bestandteile des Kühlsystems kompakter gebaut werden kann, um diejenige Wärmemenge über das Wasser abzuführen, welche bisher beispielsweise über Luft abgeführt wurde.

Unter der Bezeichnung "Wasser" ist in der vorliegenden Beschreibung ein Kühlmedium zu verstehen, welches ausschließlich aus Wasser bestehen kann oder zumindest einen Anteil von Wasser hat. Beispielsweise kann das als "Wasser" bezeichnete Kühlmedium ein wässriges Gemisch mit einem Anteil von Frostschutzmittel, wie beispielsweise Glykol sein. Beispielsweise handelt es sich um ein Gemisch mit einem Anteil von 50 % Wasser und 50 % Frostschutzmittel, insbesondere Glykol.

Weiterhin ist es erfindungsgemäß vorgesehen, dass der wasserführende Kühlkreis über einen Wasser-Öl-Wärmetauscher mit dem ölführenden Kühlkreis wärmetechnisch bzw. kühlungsmäßig verbunden ist. Diese Maßnahme zielt darauf ab, zwischen dem Wasser des wasserführenden Kreislaufes und dem Öl des ölführenden Kreislaufes einen wirkungsvollen Wärmeaustausch zu begünstigen.

Beispielsweise ist, bezogen auf die Förderrichtung, der Wasser-Öl-Wärmetauscher der Verbrennungskraftmaschine vorgeschaltet. Beispielsweise sind der Wasser-Öl-Wärmetauscher und die Verbrennungskraftmaschine in Reihe zueinander geschaltet. Beispielsweise ist, die Fördereinrichtung dem Wasser-Öl-Wärmetauscher nachgeschaltet und der Verbrennungskraftmaschine vorgeschaltet.

Erfindungsgemäß umfasst die landwirtschaftliche Maschine wenigstens eine weitere ölführende Funktionseinheit, welche an einem weiteren ölführenden Kühlkreis kühlungsmäßig angeschlossen ist. Der ölführende Kühlkreis und der weitere ölführende Kühlkreis sind über einen Öl-Öl-Wärmetauscher wärmetechnisch miteinander verbunden, um über den wasserführenden Kühlkreis, den Wasser-Öl-Wärmetauscher und den Öl-Öl-Wärmetauscher das Öl der wenigstens einen weiteren ölführenden Funktionseinheit zu kühlen.

Eine der Funktionseinheiten umfasst ein Getriebe, insbesondere ein Getriebe für die Verbrennungskraftmaschine, oder die eine Funktionseinheit ist das Getriebe. Eine andere der Funktionseinheiten umfasst ein hydraulisches Nebenaggregat oder bildet das hydraulische Nebenaggregat.

Nach einer weiteren Ausführungsform umfasst der wasserführende Kühlkreis wenigstens zwei Kühler, von denen ein erster Kühler und ein zweiter Kühler in Reihe geschaltet sind. Beispielsweise ist, bezogen auf die Förderrichtung, der zweite Kühler dem ersten Kühler nachgeschaltet und dem Wasser-Öl-Wärmetauscher vorgeschaltet. Beispielsweise umfasst der wasserführende Kühlkreis eine Kurzschlussleitung, über welche der erste Kühler unter Umgehung des zweiten Kühlers und des Wasser-Öl-Wärmetauschers mit der Koppelstelle wirkverbunden ist. Beispielsweise ist wenigstens einer der Kühler ein Luft-Wasser-Kühler, welcher wasserseitig in den wasserseitigen Kühlkreis integriert ist. Beispielsweise sind die wenigstens zwei Kühler in einer Zwillingskühlereinheit zusammengefasst.

Durch die wenigstens zwei Kühler ist eine Kühlung des Wassers in Stufen ermöglicht. Durch die Kurzschlussleitung, welche in Förderrichtung gesehen, nach dem ersten Kühler von dem Kühlkreis abgeht, ist ein Teilstrom an Wasser aus dem Hauptstrom des Kühlkreises zu entnehmen, wobei das Wasser dieses Teilstroms erst den ersten Kühler passiert hat und insofern erst die erste Kühlungsstufe durchlaufen hat. Demgegenüber passiert das Wasser des verbleibenden Hauptstromes auch den zweiten Kühler, also die zweite Kühlungsstufe, und weist somit gegenüber dem Wasser des Teilstromes der Kurzschlussleitung ein niedrigeres Temperaturniveau auf. Dadurch ist eine Maßnahme ergriffen, für die Kühlung der Verbrennungskraftmaschine ebenso für die Kühlung des Öles der Funktionseinheit eine spezifische Vorlauftemperatur bereitzustellen, um beispielsweise jeweils eine optimale Kühlung bzw. Kühlleistung zu ermöglichen.

Indem die Kurzschlussleitung nach Umgehung des Wasser-Öl-Wärmetauschers wieder in den Kühlkreis mündet und somit das Wasser des darin geführten Teilstromes dem Hauptstrom wieder zugeführt wird, ist das der Verbrennungskraftmaschine zugeführte Wasser wärmer oder weniger kalt als das dem Wasser-Öl-Wärmetauscher zugeführte Wasser, welches zusätzlich den zweiten Kühler passiert hat. Dadurch ist eine Maßnahme ergriffen, um zwei unterschiedliche Vorlauftemperaturen bereitzustellen, von denen die Vorlauftemperatur für die Kühlung des Öles der Funktionseinheit kühler oder weniger warm als die Vorlauftemperatur für die Kühlung der Verbrennungskraftmaschine ist.

Es können bei dem wasserführenden Kühlkreis bauliche Maßnahmen ergriffen sein, um einen Temperaturwert für die jeweilige spezifische Vorlauftemperatur gezielt bereitzustellen. Beispielsweise sind hierfür die Querschnitte der wasserführenden Leitungen und/oder Kanäle, insbesondere der Kurzschlussleitung, entsprechend bemessen. Ergänzend oder alternativ kann wenigstens eine Einrichtung zur Steuerung des Durchflusses des Teilstromes in der Kurzschlussleitung und/oder zur Steuerung des Durchflusses des Hauptstromes nach der Entnahme des Teilstromes vorgesehen sein. Ergänzend oder alternativ kann die Fördereinrichtung in ihrer Förderleistung veränderbar sein. Die Einrichtung zur Steuerung des Durchflusses und/oder die Fördereinrichtung kann manuell betätigbar bzw. einstellbar sein und/oder von einer elektronischen Steuerung oder Regelung angesteuert sein oder werden.

Beispielsweise ist der wasserführende Kühlkreis eingerichtet, das Wasser derart zu kühlen, dass das Wasser im Bereich eines Kühlerauslasses des ersten Kühlers eine Temperatur zwischen etwa 98 Grad Celsius und etwa 102 Grad Celsius, insbesondere zwischen 98 Grad Celsius und 102 Grad Celsius hat, und das Wasser im Bereich eines Kühlerauslasses des zweiten Kühlers eine Temperatur unter 95 Grad Celsius aufweist, beispielsweise eine Temperatur zwischen 80 Grad Celsius und 94 Grad Celsius aufweist.

Nach einer weiteren Ausführungsform umfasst der ölführende Kreislauf den Öl-Öl-Wärmetauscher, über welchen der weitere ölführende Kühlkreis angeschlossen ist, um das Öl des weiteren ölführenden Kreislaufes zu kühlen. Der weitere ölführende Kreislauf ist mit der weiteren ölführenden Funktionseinheit wärmemäßig verbunden, so dass über den wasserführenden Kühlkreis und die beiden ölführenden Kreisläufe das Öl der weiteren Funktionseinheit gekühlt werden kann oder ein Erwärmen möglich ist.

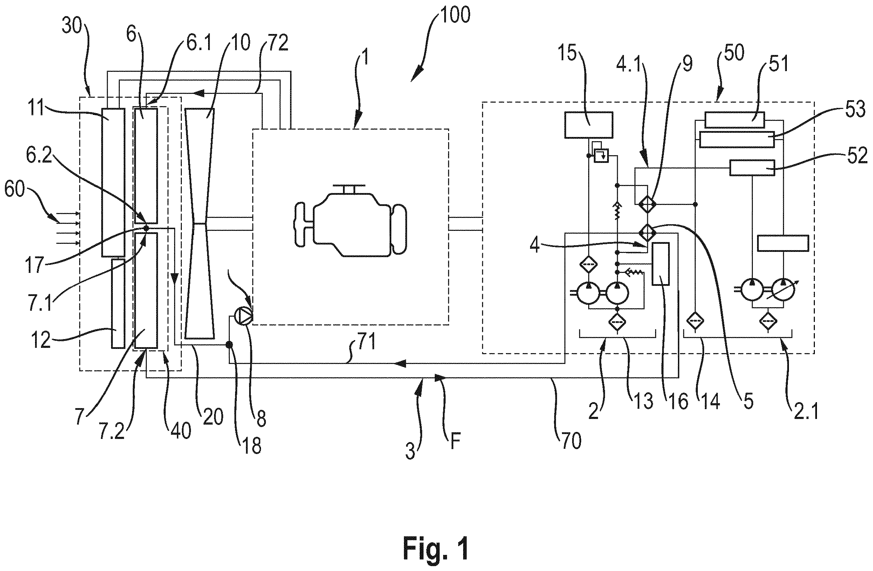

Weitere Einzelheiten und Merkmale der Erfindung ergeben sich aus der nachfolgenden Beschreibung eines Ausführungsbeispiels anhand der Zeichnung. Es zeigt die einzige Figur (Fig.) in einer Schemazeichnung eine landwirtschaftliche Maschine 100, welche beispielsweise ein Traktor oder eine Erntemaschine ist.

Die landwirtschaftliche Maschine 100 umfasst eine Verbrennungskraftmaschine 1, welche eingerichtet ist, mit Wasser gekühlt zu werden. Die landwirtschaftliche Maschine 100 umfasst ferner eine ölführende Funktionseinheit 2, wobei deren Öl beispielsweise als Hydrauliköl und/oder Schmieröl genutzt ist. Die ölführende Funktionseinheit 2 kann ein Getriebe oder eine Getriebeeinheit sein, welche mit der Verbrennungskraftmaschine 1 zusammenwirkt, wobei das Öl dann das Schmieröl für das Getriebe bzw. die Getriebeeinheit ist. In der Fig. ist die ölführende Funktionseinheit 2 durch eine schematisch dargestellte Ölwanne 13 beispielhaft angedeutet.

Die ölführende Funktionseinheit 2 kann ein Bestandteil eines Übertragungssystems 50 sein, welches in der Fig. durch eine gestrichelt dargestellte Linie angedeutet ist. Beispielsweise umfasst das Übertragungssystem 50 eine weitere ölführende Funktionseinheit 2.1, deren Öl beispielsweise als Hydrauliköl und/oder Schmieröl genutzt ist. Die weitere ölführende Funktionseinheit 2.1 ist in der einzigen Fig. durch eine beispielhaft dargestellte weitere Ölwanne 14 angedeutet. Beispielsweise umfasst die weitere ölführende Funktionseinheit 2.1 wenigstens eine oder mehrere einzelne Funktionseinrichtungen, welche beispielsweise das Öl als Hydrauliköl nutzen. Derartige Funktionseinrichtungen können eine hydraulisch betätigbare Anhängerbremse 51, ein hydraulisches Lenksystem 52 und/oder hydraulische Nebenaggregate 53 der landwirtschaftlichen Maschine 100 sein.

Weiterhin umfasst die landwirtschaftliche Maschine 100 einen wasserführenden Kühlkreis 3 und wenigstens einen ölführenden Kühlkreis 4. Der wasserführende Kühlkreis 3 ist an der Verbrennungskraftmaschine 1 über wenigstens eine Koppelstelle 21 kühlungsmäßig angeschlossen und weist eine Fördereinrichtung 8, wie beispielsweise eine Förderpumpe auf, um das Wasser des wasserführenden Kühlkreises 3 in eine Förderrichtung F zu bewegen.

Der ölführende Kühlkreis 4 ist an einer der ölführenden Funktionseinheiten 2, 2.1 kühlungsmäßig angeschlossen und dient zum Kühlen des in der einen Funktionseinheit 2 bzw. 2.1 geführten Öles. Der ölführende Kühlkreis 4 kann als Kühlmedium dazu direkt das Öl der einen ölführenden Funktionseinheit 2 bzw. 2.1 nutzen oder ein separates Öl aufweisen, welches seine Wärme an das Öl der einen ölführenden Funktionseinheit 2 bzw. 2.1 abgibt. Beispielhaft ist in der Fig. der ölführende Kühlkreis 4 der ölführenden Funktionseinheit 2 zugeordnet.

Der ölführende Kühlkreis 4 kann eine Druckregelung 15 aufweisen, um den Öldruck in dem ölführenden Kühlkreis 4 zu überwachen und/oder zu steuern. Auf etwaige weitere Bauteile der ölführenden Funktionseinheit 2 und/oder des ölführenden Kühlkreises 4, welche beispielhaft in der Fig. dargestellt sind, wird der Einfachheit halber nicht näher eingegangen, da die Bauteile und/oder deren Funktionen im Hinblick auf die ölführende Funktionseinheit 2 und/oder den ölführenden Kühlkreis 4 üblich sind.

Erfindungsgemäß sind der wasserführende Kühlkreis 3 und der ölführende Kühlkreis 4 wärmemäßig miteinander gekoppelt, so dass der wasserführende Kühlkreis 3 zum Kühlen des Öles der ölführenden Funktionseinheit 2 genutzt ist bzw. genutzt werden kann. Dazu sind der wasserführende Kühlkreis 3 und der ölführende Kühlkreis 4 über einen Wasser-Öl-Wärmetauscher 5 miteinander wärmetechnisch verbunden. Bevorzugt ist dazu der Wasser-Öl-Wärmetauscher 5 einerseits an den wasserführenden Kühlkreis 3 und andererseits an den ölführenden Kühlkreis 4 angeschlossen.

Um den unterschiedlichen Temperaturanforderungen im Hinblick auf die Kühlung der Verbrennungskraftmaschine 1 im Vergleich zu der Kühlung der ölführenden Funktionseinheit 2 zu genügen, zeigt die Fig. eine mögliche Ausgestaltung des wasserführenden Kühlkreises 3, welche dafür zum Einsatz kommen kann. Bevorzugt weist der wasserführende Kühlkreis 3 wenigstens zwei Kühler 6, 7 auf, welche beispielsweise jeweils einen Kühlereinlass 6.1 bzw. 7.1 und einen Kühlerauslass 6.2 bzw. 7.2 umfassen, von denen ein erster Kühler 6 und ein zweiter Kühler 7 in Reihe zueinander geschaltet sind. Beispielsweise ist dazu die Kühler 6, 7 derart verschaltet, dass bezogen auf die Förderrichtung F, dass Wasser zuerst in den Kühlereinlass 6.1 des ersten Kühlers 6 strömt, den ersten Kühler 6 über den Kühlerauslass 6.2 verlässt und anschließend in den Kühlereinlass 7.1 des zweiten Kühlers 7 strömt und den zweiten Kühler 7 dann über den Kühlerauslass 7.2 verlässt.

Beispielsweise ist wenigstens einer der Kühler 6, 7 ein Luft-Wasserkühler. Bevorzugt sind die wenigstens zwei Kühler 6, 7 jeweils ein Luft-Wasserkühler und bilden beispielsweise eine Zwillings-Wasserkühlereinheit 40 aus, welche beispielsweise Bestandteil einer Kühlereinheit 30 der landwirtschaftlichen Maschine 100 sein kann. Die Wasserkühlereinheit 40 bzw. die Kühlereinheit 30 ist bevorzugt im Frontbereich der landwirtschaftlichen Maschine 100 angeordnet, so dass es bei einer Vorwärtsfahrt der Fahrtwind zum Kühlen genutzt wird oder werden kann.

Die Kühlereinheit 30 kann einen Ladeluftkühler 11 und/oder einen Kondensator 12 umfassen, welche in Wirkverbindung zu der Verbrennungskraftmaschine 100 steht. Bevorzugt ist im Frontbereich ein Kühlgebläse 10 vorgesehen, welches beispielsweise von der Verbrennungskraftmaschine 1 angetrieben ist, um Luft gemäß Pfeil 60 anzusaugen und dadurch um ein Durchströmen der Kühleinheit 30 zu begünstigen.

Bevorzugt ist der Wasser-Öl-Wärmetauscher 5 in Reihe zu den Kühlern 6, 7 angeordnet. Bevorzugt befindet sich der Wasser-Öl-Wärmetauscher 5, bezogen auf die Förderrichtung F, nach dem zweiten Kühler 7 und vor der Verbrennungskraftmaschine 1 und ist beispielsweise mit dem zweiten Kühler 7 über eine erste Wasserleitung 70 strömungsmäßig verbunden. Es ist auf diese Weise das gekühlte Wasser zuerst dem Wasser-Öl-Wärmetauscher 5 zugeführt. Erst anschließend wird das gekühlte und durch den Wasser-Öl-Wärmetauscher 5 wieder etwas erwärmte Wasser, beispielsweise über eine zweite Wasserleitung 71, der Verbrennungskraftmaschine 1 zugeführt. Dadurch ist es berücksichtigt, dass zur Kühlung des Öles der ölführenden Funktionseinheit 2 das in den Wasser-Öl-Wärmetauscher 5 strömende Wasser eine niedrigere Temperatur aufzuweisen hat, also kühler zu sein hat als dies zur Kühlung der Verbrennungskraftmaschine 1 notwendig ist. Beispielsweise ist die Verbrennungskraftmaschine 1 über eine dritte Wasserleitung 72 mit dem Kühlereinlasse 6.1 des ersten Kühlers 6 wirkverbunden.

Um die Temperatur des Wassers am Eingang der Verbrennungskraftmaschine 1 auf ein vorgegebenes Niveau gezielt zu bringen, ist eine Kurzschlussleitung 20 vorgesehen, welche einerseits an einer zwischen dem ersten Kühler 6 und dem zweiten Kühler 7 angeordneten Abzweigung 17 mit dem wasserführenden Kühlkreis 3 strömungsverbunden ist und andererseits an einer Einkoppelstelle 18 wieder in den wasserführenden Kühlkreis 3 eingekoppelt ist, und zwar vor der Verbrennungskraftmaschine 1 und nach dem Wasser-Öl-Wärmetauscher 5. Insofern ist durch die Kurzschlussleitung 20 der zweite Kühler 7 und der Wasser-Öl-Wärmetauscher 5 umgangen.

Auf diese Art und Weise wird über die Kurzschlussleitung 20 ein Teilstrom des Wassers vor Eintritt in den zweiten Kühler 7 aus dem Hauptstrom des wasserführenden Kühlkreises 3 abgezweigt und der Hauptstrom des wasserführenden Kühlkreises 3 nach dem Wasser-Öl-Wärmetauscher 5 und vor der Verbrennungskraftmaschine 1 wieder zugeführt. An der Koppelstelle 21 zur Verbrennungskraftmaschine 1 wirkt somit der über die Kurzschlussleitung 20 aus dem Hauptstrom entnommene Teilstrom des Wassers als wieder zugeführter Anteil des Hauptstromes.

Beispielsweise ist der wasserführende Kühlkreis 3 in der Weise ausgelegt, dass das Wasser des wasserführenden Kühlkreises 3 im Bereich des Kühlerauslasses 6.2 des ersten Kühlers 6 eine Temperatur zwischen 98 Grad Celsius und 102 Grad Celsius hat und das Wasser im Bereich des Kühlerauslasses 7.2 des zweiten Kühlers 7 eine Temperatur unter 95 Grad Celsius aufweist.

Es ist wenigstens ein weiterer ölführender Kühlkreis 4.1 vorgesehen, um das Öl der wenigstens einen weiteren ölführenden Funktionseinheit 2.1 zu kühlen. Hierzu ist es vorgesehen sein, dass der ölführende Kühlkreis 4 und der weitere ölführende Kühlkreis 4.1 über einen Öl-Öl-Wärmetauscher 9 wärmetechnisch miteinander verbunden sind. Auf diese Art und Weise ist eine Kühlverbindung von dem wasserführenden Kühlkreis 3 über den ölführenden Kühlkreis 4 auf den weiteren ölführenden Kühlkreis 4.1 realisiert, so dass über die Kühlung des Wassers des wasserführenden Kühlkreises 3 mittelbar auch das Öl des weiteren ölführenden Kühlkreises 4.1 gekühlt wird.

### Bezugszeichenliste

- 1: Verbrennungskraftmaschine
- 2: ölführende Funktionseinheit
- 2.1: weitere ölführende Funktionseinheit
- 3: wasserführender Kühlkreis
- 4: ölführender Kühlkreis
- 4.1: weiterer ölführender Kühlkreis
- 5: Wasser-Öl-Wärmetauscher
- 6: Kühler, erster Kühler
- 6.1: Kühlereinlass
- 6.2: Kühlerauslass
- 7: Kühler, zweiter Kühler
- 7.1: Kühlereinlass
- 7.2: Kühlerauslass
- 8: Fördereinrichtung
- 9: Öl-Öl-Wärmetauscher
- 10: Kühlgebläse
- 11: Ladeluftkühler
- 12: Kondensator
- 13: Ölwanne
- 14: weitere Ölwanne
- 15: Druckregelung
- 16: Vorratsbehälter
- 17: Abzweigung
- 18: Einkoppelstelle

- 20: Kurzschlussleitung
- 21: Koppelstelle

- 30: Kühlereinheit
- 40: Wasserkühlereinheit
- 50: Übertragungssystem
- 51: Anhängerbremse
- 52: Lenksystem
- 53: hydraulische Nebenaggregate

- 60: Pfeil

- 70: erste Wasserleitung
- 71: zweite Wasserleitung
- 72: dritte Wasserleitung

- 100: landwirtschaftliche Maschine

- F: Förderrichtung

## Patentansprüche

1. Landwirtschaftliche Maschine (100) mit einem Kühlsystem, umfassend einen wasserführenden Kühlkreis (3), einen ölführenden Kühlkreis (4) und eine dem wasserführenden Kühlkreis (3) zugeordnete Fördereinrichtung (8), wobei der wasserführende Kühlkreis (3) eingerichtet ist, über wenigstens eine Koppelstelle (21) an eine Verbrennungskraftmaschine (1) kühlungsmäßig angeschlossen zu werden, und der ölführende Kühlkreis (4) eingerichtet ist, an eine ölführende Funktionseinheit (2) kühlungsmäßig angeschlossen zu werden, wobei das Öl der Funktionseinheit (2) als Hydrauliköl und/oder Schmieröl genutzt ist und die Verbrennungskraftmaschine (1) eingerichtet ist, mit Wasser gekühlt zu werden, und wobei die Fördereinrichtung (8) eingerichtet ist, das Wasser des wasserführenden Kühlkreises (3) in eine Förderrichtung (F) zu bewegen, wobei der wasserführende Kühlkreis (3) und der ölführende Kühlkreis (4) kühlungsmäßig miteinander verbunden sind, um über den wasserführenden Kühlkreis (3) das Öl des ölführenden Kühlkreises (4) zu kühlen, wobei der wasserführende Kühlkreis (3) über einen Wasser-Öl-Wärmetauscher (5) mit dem ölführenden Kühlkreis (4) kühlungsmäßig verbunden ist, **dadurch gekennzeichnet, dass** die Maschine (100) wenigstens eine weitere ölführende Funktionseinheit (2.1) umfasst, welche an einem weiteren ölführenden Kühlkreis (4.1) kühlungsmäßig angeschlossen ist, wobei der ölführende Kühlkreis (4) und der weitere ölführende Kühlkreis (4.1) über einen Öl-Öl-Wärmetauscher (9) wärmetechnisch miteinander verbunden sind, um über den wasserführenden Kühlkreis (3), den Wasser-Öl-Wärmetauscher (5) und den Öl-Öl-Wärmetauscher (9) das Öl der wenigstens einen weiteren ölführenden Funktionseinheit (2.1) zu kühlen, wobei eine der Funktionseinheiten (2, 2.1) ein Getriebe umfasst und eine andere der Funktionseinheiten (2, 2.1) ein hydraulisches Nebenaggregat umfasst.

2. Landwirtschaftliche Maschine (100) nach Anspruch 1, **dadurch gekennzeichnet, dass** der wasserführende Kühlkreis (3) wenigstens zwei Kühler (6, 7) umfasst, von denen ein erster Kühler (6) und ein zweiter Kühler (7) in Reihe geschaltet sind und, bezogen auf die Förderrichtung (F), der zweite Kühler (7) dem ersten Kühler (6) nachgeschaltet und dem Wasser-Öl-Wärmetauscher (5) vorgeschaltet ist, und wobei der wasserführende Kühlkreis (3) ferner eine Kurzschlussleitung (20) umfasst, über welche der erste Kühler (6) unter Umgehung des zweiten Kühlers (7) und des Wasser-Öl-Wärmetauschers (5) mit der Koppelstelle (21) wirkverbunden ist.

3. Landwirtschaftliche Maschine (100) nach Anspruch 2, **dadurch gekennzeichnet, dass** die wenigstens zwei Kühler (6, 7) jeweils einen Kühlerauslass (6.2, 7.2) aufweisen und eingerichtet sind, das Wasser des wasserführenden Kühlkreises (3) derart zu kühlen, dass das Wasser im Bereich des Kühlerauslasses (6.2) des ersten Kühlers (6) eine Temperatur zwischen 98 Grad Celsius und 102 Grad Celsius hat und das Wasser im Bereich des Kühlerauslasses (7.2) des zweiten Kühlers (7) eine Temperatur unter 95 Grad Celsius aufweist.

4. Landwirtschaftliche Maschine (100) nach einem der vorhergehenden Ansprüche, **dadurch gekennzeichnet, dass** der ölführende Kühlkreis (4) den Öl-Öl-Wärmetauscher (9) umfasst, über welchen der weitere ölführende Kühlkreis (4.1) angeschlossen ist, um das Öl des weiteren ölführenden Kühlkreises (4.1) zu kühlen.

5. Landwirtschaftliche Maschine (100) nach einem der vorhergehenden Ansprüche, **dadurch gekennzeichnet, dass** bezogen auf die Förderrichtung (F), die Verbrennungskraftmaschine (1) dem Wasser-ÖI-Wärmetauscher (5) nachgeschaltet ist.

6. Landwirtschaftliche Maschine (100) nach einem der vorhergehenden Ansprüche, **dadurch gekennzeichnet, dass** bezogen auf die Förderrichtung (F), die Fördereinrichtung (8) der Verbrennungskraftmaschine (1) vorgeschaltet und dem Wasser-Öl-Wärmetauscher (5) nachgeschaltet ist.

## Claims

1. An agricultural machine (100) with a cooling system, comprising a water-conducting cooling circuit (3), an oil-conducting cooling circuit (4) and a delivery device (8) which is associated with the water-conducting cooling circuit (3), wherein the water-conducting cooling circuit (3) is configured to be connected to an internal combustion engine (1) via at least one coupling point (21) for the purposes of cooling, and the oil-conducting cooling circuit (4) is configured to be connected to an oil-conducting functional unit (2) for the purposes of cooling, wherein the oil of the functional unit (2) is used as hydraulic oil and/or as lubricating oil and the internal combustion engine (1) is configured to be cooled with water, and wherein the delivery device (8) is configured to move the water of the water-conducting cooling circuit (3) in a delivery direction (F), wherein the water-conducting cooling circuit (3) and the oil-conducting cooling circuit (4) are connected to one another for the purposes of cooling in order to cool the oil of the oil-conducting cooling circuit (4) by means of the water-conducting cooling circuit (3), wherein the water-conducting cooling circuit (3) is connected to the oil-conducting cooling circuit (4) for the purposes of cooling via a water-oil heat exchanger (5), **characterized in that** the machine (100) comprises at least one further oil-conducting functional unit (2.1) which is connected to a further oil-conducting cooling circuit (4.1) for the purposes of cooling, wherein the oil-conducting cooling circuit (4) and the further oil-conducting cooling circuit (4.1) are thermotechnically connected to one another via an oil-oil heat exchanger (9) in order to cool the oil of the at least one further oil-conducting functional unit (2.1) via the water-conducting cooling circuit (3), the water-oil heat exchanger (5) and the oil-oil heat exchanger (9), wherein one of the functional units (2, 2.1) comprises a transmission and another of the functional units (2, 2.1) comprises a hydraulic auxiliary assembly.

2. The agricultural machine (100) according to claim 1, **characterized in that** the water-conducting cooling circuit (3) comprises at least two radiators (6, 7), a first radiator (6) and a second radiator (7) of which being connected in series and the second radiator (7) being connected downstream of the first radiator (6) and upstream of the water-oil heat exchanger (5) with respect to the delivery direction (F), and wherein the water-conducting cooling circuit (3) furthermore comprises a by-pass line (20) via which the first radiator (6) is operatively connected to the coupling point (21) by by-passing the second radiator (7) and the water-oil heat exchanger (5).

3. The agricultural machine (100) according to claim 2, **characterized in that** the at least two radiators (6, 7) each have a radiator outlet (6.2, 7.2) and are configured to cool the water of the water-conducting cooling circuit (3) in a manner such that the water in the region of the radiator outlet (6.2) of the first radiator (6) is at a temperature between 98 degrees Celsius and 102 degrees Celsius and the water in the region of the radiator outlet (7.2) of the second radiator (7) is at a temperature below 95 degrees Celsius.

4. The agricultural machine (100) according to one of the preceding claims, **characterized in that** the oil-conducting cooling circuit (4) comprises the oil-oil heat exchanger (9) via which the further oil-conducting cooling circuit (4.1) is connected in order to cool the oil of the further oil-conducting cooling circuit (4.1).

5. The agricultural machine (100) according to one of the preceding claims, **characterized in that** the internal combustion engine (1) is connected downstream of the water-oil heat exchanger (5) with respect to the delivery direction (F).

6. The agricultural machine (100) according to one of the preceding claims, **characterized in that** the delivery device (8) is connected upstream of the internal combustion engine (1) and downstream of the water-oil heat exchanger (5) with respect to the delivery direction (F).

## Revendications

1. Machine agricole (100) comprenant un système de refroidissement, incluant un circuit de refroidissement à circulation d'eau (3), un circuit de refroidissement à circulation d'huile (4) et un équipement d'alimentation (8) associé au circuit de refroidissement à circulation d'eau (3), le circuit de refroidissement à circulation d'eau (3) étant agencé pour être relié sur le plan du refroidissement à une machine à combustion interne (1) par l'intermédiaire d'au moins un point de couplage (21), et le circuit de refroidissement à circulation d'huile (4) étant agencé pour être relié sur le plan du refroidissement à une unité fonctionnelle à circulation d'huile (2), l'huile de l'unité fonctionnelle (2) étant utilisée comme huile hydraulique et/ou huile de graissage, et la machine à combustion interne (1) étant agencée pour être refroidie par de l'eau, et l'équipement d'alimentation (8) étant agencé pour déplacer l'eau du circuit de refroidissement à circulation d'eau (3) dans une direction d'alimentation (F), le circuit de refroidissement à circulation d'eau (3) et le circuit de refroidissement à circulation d'huile (4) étant reliés entre eux sur le plan du refroidissement afin de refroidir l'huile du circuit de refroidissement à circulation d'huile (4) par l'intermédiaire du circuit de refroidissement à circulation d'eau (3), le circuit de refroidissement à circulation d'eau (3) étant relié sur le plan du refroidissement au circuit de refroidissement à circulation d'huile (4) par l'intermédiaire d'un échangeur thermique eau-huile (5), **caractérisée en ce que** la machine (100) inclut au moins une autre unité fonctionnelle à circulation d'huile (2.1) qui est reliée sur le plan du refroidissement à un autre circuit de refroidissement à circulation d'huile (4.1), le circuit de refroidissement à circulation d'huile (4) et l'autre circuit de refroidissement à circulation d'huile (4.1) étant reliés entre eux thermiquement par l'intermédiaire d'un échangeur thermique huile-huile (9) afin de refroidir l'huile de la au moins une autre unité fonctionnelle à circulation d'huile (2.1) par l'intermédiaire du circuit de refroidissement à circulation d'eau (3), de l'échangeur thermique eau-huile (5) et de l'échangeur thermique huile-huile (9), une des unités fonctionnelles (2, 2.1) incluant une transmission et une autre des unités fonctionnelles (2, 2.1) incluant un organe auxiliaire hydraulique.

2. Machine agricole (100) selon la revendication 1, **caractérisée en ce que** le circuit de refroidissement à circulation d'eau (3) inclut au moins deux refroidisseurs (6, 7) dont un premier refroidisseur (6) et un deuxième refroidisseur (7) sont montés en série, le deuxième refroidisseur (7) étant disposé en aval du premier refroidisseur (6) et en amont de l'échangeur thermique eau-huile (5) par rapport à la direction d'alimentation (F), et le circuit de refroidissement à circulation d'eau (3) incluant en outre une conduite de court-circuit (20) par l'intermédiaire de laquelle le premier refroidisseur (6) est en liaison active avec le point de couplage (21) en contournant le deuxième refroidisseur (7) et l'échangeur thermique eau-huile (5).

3. Machine agricole (100) selon la revendication 2, **caractérisée en ce que** les au moins deux refroidisseurs (6, 7) comportent respectivement une sortie de refroidisseur (6.2, 7.2) et sont agencés pour refroidir l'eau du circuit de refroidissement à circulation d'eau (3) de façon que l'eau dans la zone de la sortie de refroidisseur (6.2) du premier refroidisseur (6) ait une température entre 98 degrés Celsius et 102 degrés Celsius et que l'eau dans la zone de la sortie de refroidisseur (7.2) du deuxième refroidisseur (7) ait une température inférieure à 95 degrés Celsius.

4. Machine agricole (100) selon une des revendications précédentes, **caractérisée en ce que** le circuit de refroidissement à circulation d'huile (4) inclut l'échangeur thermique huile-huile (9) par l'intermédiaire duquel l'autre circuit de refroidissement à circulation d'huile (4.1) est relié pour refroidir l'huile de l'autre circuit de refroidissement à circulation d'huile (4.1).

5. Machine agricole (100) selon une des revendications précédentes, **caractérisée en ce que**, par rapport à la direction d'alimentation (F), la machine à combustion interne (1) est disposée en aval de l'échangeur thermique eau-huile (5).

6. Machine agricole (100) selon une des revendications précédentes, **caractérisée en ce que**, par rapport à la direction d'alimentation (F), l'équipement d'alimentation (8) est disposé en amont de la machine à combustion interne (1) et en aval de l'échangeur thermique eau-huile (5).
